(19) Europäisches Patentamt
European Patent Office
Office européen des brevets

(11) **EP 4 571 346 A1**

(12) **EUROPEAN PATENT APPLICATION**
published in accordance with Art. 153(4) EPC

(43) Date of publication:
**18.06.2025 Bulletin 2025/25**

(51) International Patent Classification (IPC):
**G01S 5/14** (2006.01)

(21) Application number: **23870645.1**

(52) Cooperative Patent Classification (CPC):
**G01S 3/46; G01S 5/14**

(22) Date of filing: **22.09.2023**

(86) International application number:
**PCT/CN2023/120826**

(87) International publication number:
**WO 2024/067414 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 CN 202211211803**

(71) Applicant: **Huawei Technologies Co., Ltd.
Shenzhen, Guangdong 518129 (CN)**

(72) Inventors:
• WANG, Wei
  **Shenzhen, Guangdong 518129 (CN)**
• ZHANG, Heng
  **Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD, COMMUNICATION APPARATUS, AND COMMUNICATION SYSTEM**

(57) Embodiments of this application provide a communication method, a communication apparatus, and a communication system. The method includes: A first device may simultaneously send signals to a plurality of other devices, and the plurality of other devices simultaneously send signals to the first device, to implement signal parallel sending. Therefore, there is no necessary relationship between signal sending time and a quantity of devices. Compared with a method for sending, by the first device and the plurality of other devices, the signals one by one in a specific sequence, the foregoing solution can reduce signal receiving and sending time, and further reduce time for performing measurement based on the signals.

```
┌────────────────────────────────────────────────────────┐
│ A first device sends a plurality of first transmit      │── 801a
│ signals in a first frequency band                       │
└────────────────────────────────────────────────────────┘
                          │
                          ▼
┌────────────────────────────────────────────────────────┐
│ The first device receives a plurality of first receive  │── 802a
│ signals                                                 │
└────────────────────────────────────────────────────────┘
```

FIG. 8(a)

## Description

## CROSS-REFERENCE TO RELATED APPLICATIONS

This application claims priority to Chinese Patent Application No. 202211211803.2, filed with the China National Intellectual Property Administration on September 30, 2022 and entitled "COMMUNICATION METHOD, COMMUNICATION APPARATUS, AND COMMUNICATION SYSTEM", which is incorporated herein by reference in its entirety.

## TECHNICAL FIELD

This application relates to the field of wireless communication technologies, and in particular, to a communication method, a communication apparatus, and a communication system.

## BACKGROUND

With the advent of the internet of everything era, low-power narrowband wireless technologies such as Bluetooth (Bluetooth) and Zigbee (Zigbee) are increasingly widely used in daily life. Compared with advantages of other wireless technologies such as a 5th generation (5th generation, 5G) technology and wireless fidelity (wireless fidelity, Wi-Fi), advantages of the low-power narrowband wireless technologies include: (1) extremely low power consumption, which means that a device has longer usage time; and (2) a simpler design, which means that device costs are lower. Therefore, the low-power narrowband wireless technologies are not only widely used in consumer devices (such as mobile phones, wearable devices, and smart household appliances), but also widely used in the industrial internet of things (industrial internet of the things, IIoT).

In addition to a conventional device connection function, the low-power narrowband wireless technologies may further be used for indoor positioning. For example, Bluetooth devices and Zigbee devices of some vendors may support a multi-carrier phase difference (multi-carrier phase difference, MCPD) ranging technology and/or an angle of arrival (angle of arrival, AoA) direction finding technology. The MCPD ranging technology may be used to obtain a distance between two devices. The AoA direction finding technology may be used to obtain a direction of a device. In addition, distance information or direction information may be used to determine a location of the device.

How to reduce measurement time, such as ranging and direction finding, needs to be resolved.

## SUMMARY

This application provides a communication method, a communication apparatus, and a communication system, to reduce measurement time.

According to a first aspect, an embodiment of this application provides a communication method. The method may be performed by a first device or a module (for example, a chip) used in the first device. The method includes: The first device sends a plurality of first transmit signals in a first frequency band, where the plurality of first transmit signals include $P$ first signals sent to a second device and $Q$ second signals sent to a third device, frequencies of the $P$ first signals and the $Q$ second signals are different from each other, a frequency band in which the $P$ first signals are located is included in the first frequency band, a frequency band in which the $Q$ second signals are located is included in the first frequency band, and both $P$ and $Q$ are positive integers; and the first device receives a plurality of first receive signals, where the plurality of first receive signals include $P$ third signals from the second device and $Q$ fourth signals from the third device, frequencies of the $P$ third signals are correspondingly the same as frequencies of the $P$ first signals, and frequencies of the $Q$ fourth signals are correspondingly the same as frequencies of the $Q$ second signals.

In the following solution, the first device may simultaneously send signals to a plurality of other devices, and the plurality of other devices simultaneously send signals to the first device, thereby implementing signal parallel sending. Therefore, there is no necessary relationship between signal sending time and a quantity of devices. Compared with a method for sending, the first device and the plurality of other devices, the signals one by one in a specific sequence, the foregoing solution can reduce signal receiving and sending time, and further reduce time for performing measurement based on the signals.

In a possible implementation method, the $P$ first signals and the $P$ third signals are used to measure a channel between the first device and the second device, and the $Q$ second signals and the $Q$ fourth signals are used to measure a channel between the first device and the third device.

In a possible implementation method, the $P$ first signals and the $P$ third signals are used to measure a distance between the first device and the second device, and the $Q$ second signals and the $Q$ fourth signals are used to measure a distance between the first device and the third device.

In a possible implementation method, the first device sends a plurality of second transmit signals in the first frequency band, where the plurality of second transmit signals include $Q$ fifth signals sent to the second device and $P$ sixth signals sent to the third device, frequencies of the $Q$ fifth signals are correspondingly the same as the frequencies of the $Q$ second signals, and frequencies of the $P$ sixth signals are correspondingly the same as the frequencies of the $P$ first signals; and the first device receives a plurality of second receive signals, where the plurality of second receive signals include $Q$ seventh signals from the second device and $P$ eighth signals from the third device, frequencies of the $P$ eighth signals are correspondingly the same as the frequencies of the P sixth signals, and frequencies of the Q seventh signals are correspondingly the same as the frequencies of the Q fifth signals.

In the foregoing solution, the second device and the third device may send signals at more frequencies. Because more signals are sent, a quantity of signals used for measurement increases. This can improve measurement accuracy.

In a possible implementation method, the first device sends first signaling to the second device, where the first signaling indicates time and a frequency at which the second device performs signal exchange with the first device; and the first device sends second signaling to the third device, where the second signaling indicates time and a frequency at which the third device performs signal exchange with the first device.

In the foregoing solution, according to the method for sending the signaling to the second device and the third device, the time and the frequency at which the second device receives and sends the signals and the time and the frequency at which the second device receives and sends the signals can be more accurate. This helps improve accuracy of signal receiving and sending.

In a possible implementation method, the first device is an anchor device, and the second device and the third device are to-be-positioned target devices.

In a possible implementation method, the first device is a to-be-positioned target device, and the second device and the third device are anchor devices.

In a possible implementation method, the first device is a broadband device, and the second device and the third device are narrowband devices.

According to a second aspect, an embodiment of this application provides a communication method. The method may be performed by a first device or a module (for example, a chip) used in the first device. The method includes: The first device receives a plurality of first receive signals in a first frequency band through a first antenna, where the plurality of first receive signals include X first signals from a second device and Y second signals from a third device, frequencies of the X first signals and the Y second signals are different from each other, a frequency band in which the X first signals are located is included in the first frequency band, a frequency band in which the Y second signals are located is included in the first frequency band, and both X and Y are positive integers; and the first device receives the plurality of first receive signals in the first frequency band through a second antenna.

In the foregoing solution, the first device may simultaneously receive signals from a plurality of other devices, thereby implementing signal parallel sending. Therefore, there is no necessary relationship between signal sending time and a quantity of devices. Compared with a method for receiving, by the first device, the signals from the plurality of other devices one by one in a sequence, the foregoing solution can reduce signal sending time, and further reduce time for performing measurement based on the signals.

In a possible implementation method, the first device performs phase measurement on the X first signals received through the first antenna, and performs phase measurement on the X first signals received through the second antenna, to obtain 2*X first phase measurement values, where the 2*X first phase measurement values are used to determine an angle between the first device and the second device; and the first device performs phase measurement on the Y second signals received through the first antenna, and performs phase measurement on the Y second signals received through the second antenna, to obtain 2*Y second phase measurement values, where the 2*Y second phase measurement values are used to determine an angle between the first device and the third device.

In a possible implementation method, the first device sends first signaling to the second device, where the first signaling indicates time and a frequency at which the second device performs signal exchange with the first device; and the first device sends second signaling to the third device, where the second signaling indicates time and a frequency at which the third device performs signal exchange with the first device.

In the foregoing solution, according to the method for sending the signaling to the second device and the third device, the time and the frequency at which the second device receives and sends the signals and the time and the frequency at which the second device receives and sends the signals can be more accurate. This helps improve accuracy of signal receiving and sending.

In a possible implementation method, the first device receives a plurality of second receive signals in the first frequency band through the first antenna, where the plurality of second receive signals include Y third signals from the second device and X fourth signals from the third device, frequencies of the X fourth signals are correspondingly the same as frequencies of the X first signals, and frequencies of the Y third signals are correspondingly the same as frequencies of the Y second signals; and the first device receives the plurality of second receive signals in the first frequency band through the second antenna.

In the foregoing solution, the first device may receive signals at more frequencies. Because more signals are received, a quantity of signals used for measurement increases. This can improve measurement accuracy.

In a possible implementation method, the first device is an anchor device, and the second device and the third device are to-be-positioned target devices.

In a possible implementation method, the first device is a to-be-positioned target device, and the second device and the third device are anchor devices.

In a possible implementation method, the first device is a broadband device, and the second device and the third device are narrowband devices.

According to a third aspect, an embodiment of this application provides a communication method. The method may be performed by a first device or a module (for example, a chip) used in the first device. The method includes: The first device receives L first signals from a second device, and receives L second signals from a third device, where the L first signals are sent by the second device in a first frequency band, the L second signals are sent by the third device in the first frequency band, and L is a positive integer; and the first device sends L third signals in a broadcast manner, where frequencies of the L first signals, the L second signals, and the L third signals are correspondingly the same.

In the foregoing solution, the first device may simultaneously send signals to a plurality of other devices in a broadcast manner, thereby implementing signal parallel sending. Therefore, there is no necessary relationship between signal sending time and a quantity of devices. Compared with a method for sending, by the first device and the plurality of other devices, the signals one by one in a specific sequence, the foregoing solution can reduce signal receiving and sending time, and further reduce time for performing measurement based on the signals.

In a possible implementation method, the L first signals and the L third signals are used to measure a channel between the first device and the second device, and the L second signals and the L third signals are used to measure a channel between the first device and the third device.

In a possible implementation method, the first device receives first signaling from the second device, where the first signaling indicates time and a frequency at which the first device performs signal exchange with the second device; and the first device receives second signaling from the third device, where the second signaling indicates time and a frequency at which the first device performs signal exchange with the third device.

In a possible implementation method, the first device is an anchor device, and the second device and the third device are to-be-positioned target devices.

In a possible implementation method, the first device is a to-be-positioned target device, and the second device and the third device are anchor devices.

In a possible implementation method, the first device is a narrowband device, and the second device and the third device are broadband devices.

According to a fourth aspect, an embodiment of this application provides a communication apparatus. The apparatus may be a first device, or may be a module (for example, a chip) used in the first device. The apparatus has a function of implementing any implementation method according to the first aspect to the third aspect. The function may be implemented by hardware, or may be implemented by hardware executing corresponding software. The hardware or the software includes one or more modules corresponding to the function.

According to a fifth aspect, an embodiment of this application provides a communication apparatus, including a processor and an interface circuit. The processor is configured to: communicate with another apparatus through the interface circuit, and perform any implementation method according to the first aspect to the third aspect. There are one or more processors.

According to a sixth aspect, an embodiment of this application provides a communication apparatus, including a processor coupled to a memory. The processor is configured to invoke a program stored in the memory, to perform any implementation method according to the first aspect to the third aspect. The memory may be located inside or outside the apparatus. In addition, there may be one or more processors.

According to a seventh aspect, an embodiment of this application provides a communication apparatus, including a processor and a memory. The memory is configured to store computer instructions, and when the apparatus runs, the processor executes the computer instructions stored in the memory, so that the apparatus performs any implementation method according to the first aspect to the third aspect.

According to an eighth aspect, an embodiment of this application provides a communication apparatus, including units or means configured to perform steps of any implementation method according to the first aspect to the third aspect.

According to a ninth aspect, an embodiment of this application provides a communication apparatus. The apparatus may be a radio access network device, or may be a chip or a module used in the radio access network device. The apparatus has a function of implementing any implementation method according to the first aspect. The function may be implemented by hardware, or may be implemented by hardware executing corresponding software. The hardware or the software includes one or more modules corresponding to the function.

According to a tenth aspect, an embodiment of this application further provides a computer-readable storage medium. The computer-readable storage medium stores instructions, and when the instructions are run on a communication apparatus, any implementation method according to the first aspect to the third aspect is performed.

According to an eleventh aspect, an embodiment of this application further provides a computer program product. The computer program product includes a computer program or instructions. When the computer program or the instructions are run by a communication apparatus, any implementation method according to the first aspect to the third aspect is performed.

According to a twelfth aspect, an embodiment of this application further provides a chip system, including a processor, configured to perform any implementation method according to the first aspect to the third aspect.

According to a thirteenth aspect, an embodiment of this application further provides a communication system, including a first device, a second device, and a third device. The first device is configured to perform any implementation method according to the first aspect. The second device is configured to: receive P first signals from the first device, and send P third signals to the first device, where P is a positive integer. The third device is configured to: receive Q second signals from the first device, and send Q fourth signals to the first device, where Q is a positive integer.

According to a fourteenth aspect, an embodiment of this application further provides a communication system, including a first device, a second device, and a third device. The first device is configured to perform any implementation method according to the second aspect. The second device is configured to send X first signals to the first device, where X is a positive integer. The third device is configured to send Y second signals to the first device, where Y is a positive integer.

According to a fifteenth aspect, an embodiment of this application further provides a communication system, including a first device, a second device, and a third device. The first device is configured to perform any implementation method according to the third aspect. The second device is configured to send L first signals to the first device in a first frequency band. The third device is configured to send L second signals to the first device in the first frequency band, where L is a positive integer.

According to a sixteenth aspect, an embodiment of this application further provides a communication apparatus, including: a sending unit, configured to send a plurality of first transmit signals in a first frequency band, where the plurality of first transmit signals include P first signals sent to a second device and Q second signals sent to a third device, frequencies of the P first signals and the Q second signals are different from each other, a frequency band in which the P first signals are located is included in the first frequency band, a frequency band in which the Q second signals are located is included in the first frequency band, and both P and Q are positive integers; and a receiving unit, configured to receive a plurality of first receive signals, where the plurality of first receive signals include P third signals from the second device and Q fourth signals from the third device, frequencies of the P third signals are correspondingly the same as frequencies of the P first signals, and frequencies of the Q fourth signals are correspondingly the same as frequencies of the Q second signals.

According to a seventeenth aspect, an embodiment of this application further provides a communication apparatus, including: a receiving unit, configured to receive a plurality of first receive signals in a first frequency band through a first antenna, where the plurality of first receive signals include X first signals from a second device and Y second signals from a third device, frequencies of the X first signals and the Y second signals are different from each other, a frequency band in which the X first signals are located is included in the first frequency band, a frequency band in which the Y second signals are located is included in the first frequency band, and both X and Y are positive integers; and receive the plurality of first receive signals in the first frequency band through a second antenna.

According to an eighteenth aspect, an embodiment of this application further provides a communication apparatus, including: a receiving unit, configured to: receive L first signals from a second device, and receive L second signals from a third device, where the L first signals are sent by the second device in a first frequency band, the L second signals are sent by the third device in the first frequency band, and L is a positive integer; and a sending unit, configured to send L third signals in a broadcast manner, where frequencies of the L first signals, the L second signals, and the L third signals are correspondingly the same.

## BRIEF DESCRIPTION OF DRAWINGS

FIG. 1 is an example diagram of determining location information of a target device;

FIG. 2 is another example diagram of determining location information of a target device;

FIG. 3 is an example diagram of determining a distance between A and B by using an MCPD ranging technology;

FIG. 4 is an example diagram of determining an angle between A and B by using an AoA direction finding technology;

FIG. 5 is an example diagram of calculating an AoA angle;

FIG. 6 is a diagram of ranging or angle measurement between one anchor device and N target devices;

FIG. 7 is a diagram of MCPD ranging between one anchor device and N target devices;

FIG. 8(a) is a schematic flowchart of a communication method according to an embodiment of this application;

FIG. 8(b) is a schematic flowchart of a communication method according to an embodiment of this application;

FIG. 8(c) is a schematic flowchart of a communication method according to an embodiment of this application;

FIG. 9 is a diagram of one round of bidirectional signal exchange between an anchor device and a target device;

FIG. 10 is an example diagram of scheduling;

FIG. 11 is another example diagram of scheduling;

FIG. 12 is a diagram of ranging between two anchor devices and N target devices;

FIG. 13 is a diagram of phase measurement of one round of signal exchange between K anchor devices and N target devices;

FIG. 14(a) is an example diagram of determining a target device via anchor devices;

FIG. 14(b) is another example diagram of determining a target device via anchor devices;

FIG. 15 is a diagram of one round of unidirectional signal exchange between an anchor device and target devices;

FIG. 16 is a diagram of a communication apparatus according to an embodiment of this application; and

FIG. 17 is a diagram of a communication apparatus according to an embodiment of this application.

## DESCRIPTION OF EMBODIMENTS

Similar to an outdoor global navigation satellite system (global navigation satellite system, GNSS) positioning system, an indoor positioning system also needs an anchor device (similar to a satellite in the GNSS) to calculate a location of a target device.

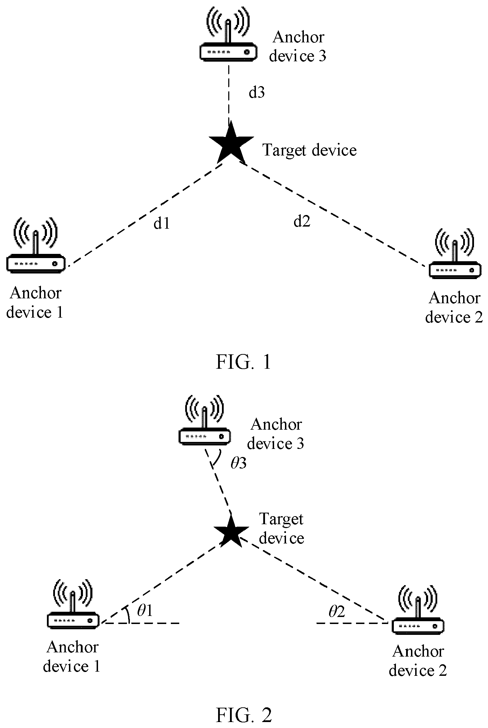

FIG. 1 is an example diagram of determining location information of a target device. In this example, an anchor device 1 determines a distance d1 between the target device and the anchor device 1, an anchor device 2 determines a distance d2 between the target device and the anchor device 2, and an anchor device 3 determines a distance d3 between the target device and the anchor device 3. Then, a processing device determines the location information of the target device based on d1, d2, and d3.

FIG. 2 is another example diagram of determining location information of a target device. In this example, an anchor device 1 determines an angle $\theta 1$ between the target device and the anchor device 1, an anchor device 2 determines an angle $\theta 2$ between the target device and the anchor device 2, and an anchor device 3 determines an angle $\theta 3$ between the target device and the anchor device 3. Then, a processing device determines the location information of the target device based on $\theta 1$, $\theta 2$, and $\theta 3$.

In the foregoing examples in FIG. 1 and FIG. 2, a method for positioning one target device in the indoor positioning system is provided. In actual application, generally, a plurality of target devices need to be simultaneously positioned.

The following separately describes a specific implementation method of determining a distance between an anchor device and a target device by using an MCPD ranging technology and a specific implementation method of determining a direction (that is, an angle) between an anchor device and a target device by using an AoA direction finding technology.

1. The distance between the anchor device and the target device is determined by using the MCPD ranging technology.

FIG. 1 is used as an example. The MCPD ranging technology may be used to determine the distance d1 between the anchor device 1 and the target device, determine the distance d2 between the anchor device 2 and the target device, and determine the distance d3 between the anchor device 3 and the target device.

The anchor device 1, the anchor device 2, the anchor device 3, and the target device may all be narrowband low-power devices.

For ease of description, in the following, A is used to represent the target device, and B is used to represent the anchor device (for example, the anchor device 1, the anchor device 2, or the anchor device 3).

Determining the distance between A and B by using the MCPD ranging technology includes the following steps.

Step 1: A and B perform bidirectional signal exchange and phase measurement at a frequency $f_1$.

A signal used for phase measurement may be a carrier signal, or may be a multi-tone signal. A maximum width of the multi-tone signal in frequency domain is determined by bandwidths of A and B.

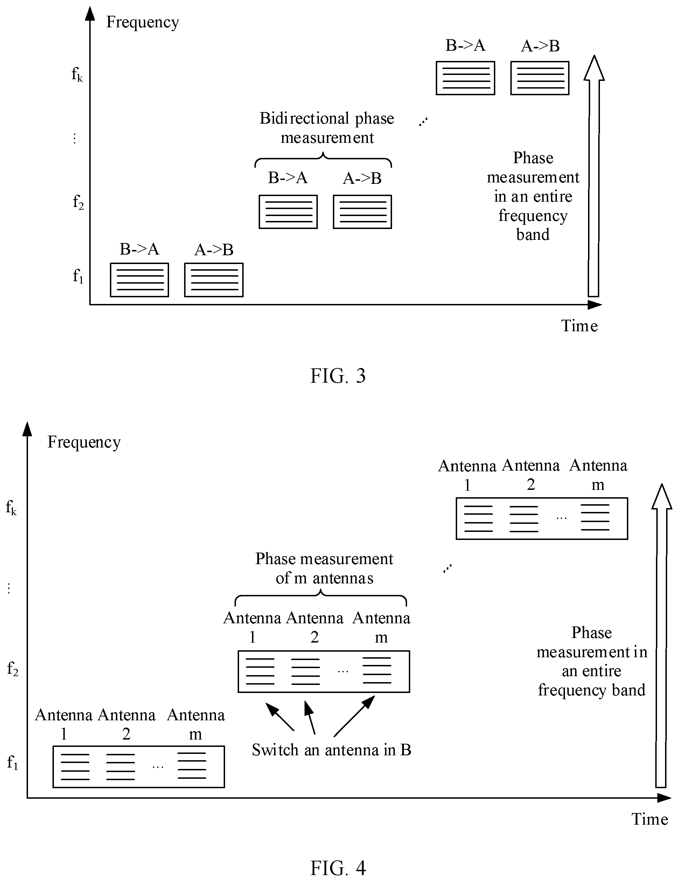

FIG. 3 is an example diagram of determining the distance between A and B by using the MCPD ranging technology. In this example, the signal used for phase measurement is a four-tone signal. In other words, A sends four signals with different frequencies to B each time. A center frequency of the four signals is $f_1$, and frequencies of the four signals are represented by $f_{11}$, $f_{12}$, $f_{13}$, and $f_{14}$.

If the signal used for phase measurement is a carrier signal, at the frequency $f_1$, when A sends a carrier signal to B, B performs phase measurement on the received carrier signal to obtain a phase measurement value, and when B sends a carrier signal to A, A performs phase measurement on the received carrier signal to obtain another phase measurement value. Therefore, for the carrier signal, A and B may separately determine one phase measurement value at the frequency $f_1$.

If the signal used for phase measurement is a multi-tone signal, at the center frequency $f_1$, when A sends a multi-tone signal (the four-tone signal in FIG. 3 is used as an example) to B, B performs phase measurement on the received four-tone signal to obtain four phase measurement values, and when B sends a four-tone signal to A, A performs phase measurement on the received four-tone signal to obtain other four phase measurement values. Therefore, for the four-tone signal, A and B may separately determine four phase measurement values at the center frequency $f_1$.

Step 2: A and B perform frequency hopping to other frequencies (for example, $f_2$, $f_3$, ..., and $f_k$), and repeat the foregoing bidirectional signal exchange and phase measurement.

An objective of frequency hopping measurement is to cover all available frequencies in an entire frequency band. For example, an available frequency band range of Bluetooth is an 80 MHz frequency band in an industrial scientific medical band (industrial scientific Medical band, ISM band) of 2.4 GHz. Theoretically, a wider covered frequency band indicates higher ranging accuracy.

If a carrier signal is used, A and B may separately obtain k phase measurement values through measurement by using steps 1 and 2, and a total of 2k phase measurement values are obtained.

If a multi-tone signal (the four-tone signal in FIG. 3 is used as an example) is used, A and B may separately obtain 4*k phase measurement values through measurement by using steps 1 and 2, and a total of 8*k phase measurement values are obtained.

Step 3: A and B send phase measurement values of all frequencies to the processing device, and the processing device performs distance estimation.

After obtaining the phase measurement values from A and B, the processing device adds a phase measurement value measured by A at a same frequency and a phase measurement value measured by B at the same frequency, and then estimates the distance between A and B based on a slope of "phase vs frequency".

A method for determining, by the processing device, the distance based on the obtained plurality of phase measurement values and frequencies corresponding to the phase measurement values is not limited in this application. For details, refer to related descriptions in the conventional technology.

In the foregoing solution, the distance between the target device and the anchor device may be calculated, which helps further position a specific location of the target device.

2. The direction between the anchor device and the target device is determined by using the AoA direction finding technology.

FIG. 2 is used as an example. The AoA direction finding technology may be used to determine the angle $\theta 1$ between the anchor device 1 and the target device, determine the angle $\theta 2$ between the anchor device 2 and the target device, and determine the angle $\theta 3$ between the anchor device 3 and the target device.

The anchor device 1, the anchor device 2, the anchor device 3, and the target device may all be narrowband low-power devices.

For ease of description, in the following, A is used to represent the target device, and B is used to represent the anchor device (for example, the anchor device 1, the anchor device 2, or the anchor device 3). In addition, the target device is a single-antenna sending device, and the anchor device is a multi-antenna receiving device. The following uses an example in which the anchor device includes m antennas, where m is greater than 1.

Determining the direction (that is, the angle) between A and B using the AoA direction finding technology includes the following steps.

Step a: A sends a signal to B at a frequency f1, and B switches an antenna and determines a phase measurement value of the signal received through each antenna.

A signal used for phase measurement may be a carrier signal, or may be a multi-tone signal. A maximum width of the multi-tone signal in frequency domain is determined by bandwidths of A and B.

It should be noted that, if there is only one receive channel in B, B may receive signals through all the antennas in a time division manner and in an antenna switching manner. If B has m receive channels, and each receive channel corresponds to one antenna in the m antennas, B may simultaneously receive signals of all the antennas through the m receive channels. A manner in which B receives the signals is not limited in this application. Unified descriptions are provided herein, and details are not described below again.

FIG. 4 is an example diagram of determining the direction between A and B by using the AoA direction finding technology. In this example, the signal used for phase measurement is a four-tone signal. In other words, A sends four signals with different frequencies to B each time. A center frequency of the four signals is $f_1$, and frequencies of the four signals are represented by $f_{11}$, $f_{12}$, $f_{13}$, and $f_{14}$.

If the signal used for phase measurement is a carrier signal, at the frequency $f_1$, when A sends a carrier signal to B, B switches the antenna and performs phase measurement on the carrier signal received through each antenna, to obtain m phase measurement values. Therefore, for the carrier signal, B may determine the m phase measurement values at the frequency $f_1$.

If the signal used for phase measurement is a multi-tone signal, at the center frequency $f_1$, when A sends a multi-tone signal (the four-tone signal in FIG. 3 is used as an example) to B, B switches the antenna and performs phase measurement on the four-tone signal received through each antenna, to obtain 4*m phase measurement values. Therefore, for the four-tone signal, B may determine the 4*m phase measurement values at the center frequency $f_1$.

Step b: A and B perform frequency hopping to other frequencies (for example, $f_2$, $f_3$, ..., and $f_k$), and repeat the foregoing unidirectional signal exchange and phase measurement.

If a carrier signal is used, B may obtain m*k phase measurement values through measurement by using steps a and b.

If a multi-tone signal (the four-tone signal in FIG. 3 is used as an example) is used, B may obtain 4*m*k phase measurement values through measurement by using steps a and b.

Theoretically, an AoA angle value can be calculated by measuring a phase measurement value of each antenna at a frequency. Actually, AoA angle estimation accuracy can be improved by measuring phase measurement values of each antenna at a plurality of frequencies.

Step c: B sends phase measurement values of all frequencies to the processing device, and the processing device performs AoA angle estimation.

After receiving the phase measurement values respectively corresponding to the plurality of antennas of B from B, the processing device may calculate the AoA angle based on a phase difference between the antennas in B.

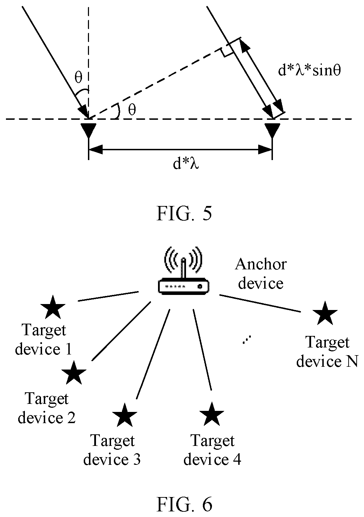

FIG. 5 is an example diagram of calculating an AoA angle. In this example, B includes two antennas. $d * \lambda$ represents a distance between the two antennas, and $\lambda$ is a signal wavelength. If a difference between phase measurement values respectively corresponding to the two antennas is $\varphi$, a relationship between $\varphi$ and an angle of incidence $\theta$ satisfies $\varphi = 2\pi * d * \sin \theta$. The angle of incidence $\theta$, that is, an angle of A relative to B, may be calculated according to this formula.

In the foregoing solution, the direction (that is, the angle) of the target device relative to the anchor device may be calculated, which helps further position a specific location of the target device.

The foregoing provides a method for measuring a distance or an angle between one anchor device and one target device. In an actual indoor positioning system, distances or angles between one anchor device and a plurality of target devices usually need to be simultaneously measured. FIG. 6 is used as an example. N (N is greater than 1) target devices need to be positioned. Therefore, the anchor device needs to perform distance or angle measurement for a plurality of times, to obtain a distance or an angle between the anchor device and each target device.

For the foregoing "one-to-many" ranging (or angle measurement) scenario, an entire measurement process includes a plurality of "one-to-one" measurements, and the measurements are performed in sequence. When a quantity of to-be-measured target devices increases, overall measurement time increases accordingly.

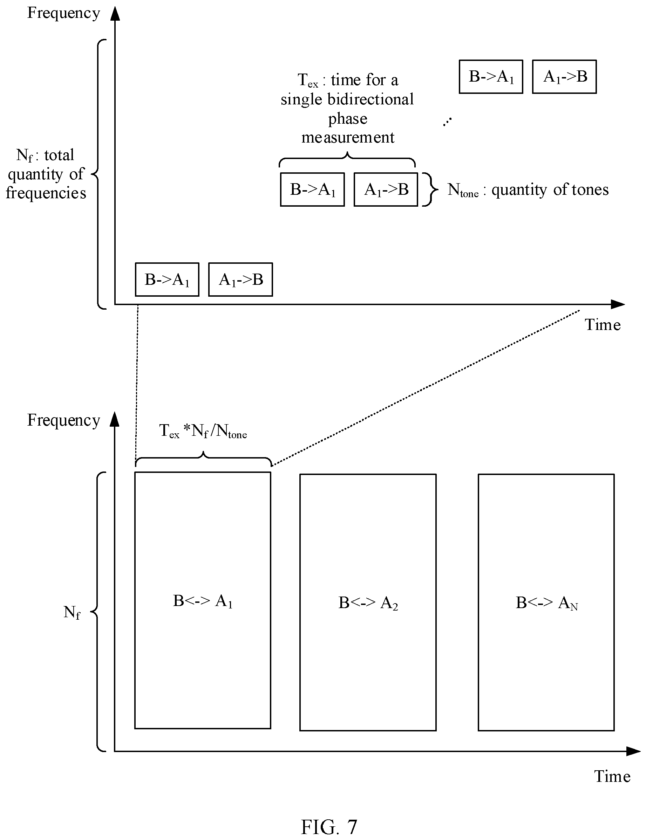

The following uses MCPD ranging between "one anchor device and N target devices" as an example to analyze a relationship between overall measurement time and a quantity of target devices. FIG. 7 is a diagram of MCPD ranging between one anchor device and N target devices. Some parameters are defined as follows: $T_{ex}$ is time of one round of bidirectional signal exchange, $N_f$ is a quantity of all frequencies in an available frequency band, N is a quantity of target devices, and $N_{tone}$ is a quantity of tones in a multi-tone signal (for a carrier signal, $N_{tone}$ = 1). When the anchor device performs MCPD ranging with a target device 1, bidirectional signal exchange needs to be performed for $N_f/N_{tone}$ times. Therefore, "one-to-one" ranging time is $T_{ex} \cdot N_f/N_{tone}$, and overall "one-to-many" ranging time is $N \cdot T_{ex} \cdot N_f/N_{tone}$. It can be learned that the overall one-to-many ranging time is in a linear increasing relationship with the quantity N of target devices.

Similarly, overall "one-to-many" AoA angle measurement (to be specific, AoA angle measurement between one anchor device and N target devices) time is also in a linear increasing relationship with the quantity N of target devices. Details are not described herein.

It can be learned that when the distances or angles between one anchor device and the plurality of target devices need to be simultaneously measured, the overall measurement time is in the linear relationship with the quantity of target devices. Therefore, how to reduce the measurement time needs to be resolved.

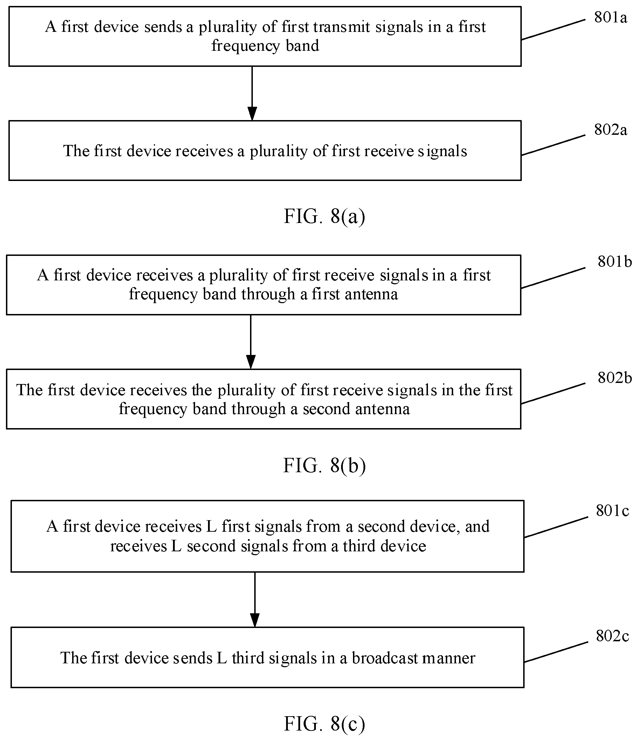

FIG. 8(a) is a schematic flowchart of a communication method according to an embodiment of this application. The method may be used for MCPD ranging. The method includes the following steps.

Step 801a: A first device sends a plurality of first transmit signals in a first frequency band.

The plurality of first transmit signals include P first signals sent to a second device and Q second signals sent to a third device, frequencies of the P first signals and the Q second signals are different from each other, a frequency band in which the P first signals are located is included in the first frequency band, a frequency band in which the Q second signals are located is included in the first frequency band, and both P and Q are positive integers. P and Q may be equal, or may not be equal.

Optionally, the plurality of first transmit signals further include signals sent to other devices, for example, include a plurality of signals sent to a fourth device and a plurality of signals sent to a fifth device. A quantity of sending objects of the plurality of first transmit signals is not limited in this application.

The first device is a broadband device, and the second device and the third device are narrowband devices.

In an implementation method, the first device is an anchor device, and the second device and the third device are to-be-positioned target devices.

In another implementation method, the first device is a to-be-positioned target device, and the second device and the third device are anchor devices.

Step 802a: The first device receives a plurality of first receive signals.

The plurality of first receive signals include P third signals from the second device and Q fourth signals from the third device, frequencies of the P third signals are correspondingly the same as frequencies of the P first signals, and frequencies of the Q fourth signals are correspondingly the same as frequencies of the Q second signals. In addition, the second device and the third device simultaneously send the signals to the first device.

If the plurality of first transmit signals further include a signal sent to another device, after receiving the signal, the another device also needs to send a corresponding quantity of signals to the first device.

It should be noted that an execution sequence of step 801a and step 802a is not limited. To be specific, step 801a may be performed before step 802a, or step 802a may be performed before step 801a.

The following provides descriptions with reference to examples.

Example 1: It is assumed that P=4 and Q=5. In this case, the first device simultaneously sends four first signals to the second device and five second signals to the third device in the first frequency band, frequencies of the nine signals are different from each other, and a frequency band in which the frequencies of the nine signals are located is included in the first frequency band. For example, frequencies of the four first signals are $f_1$, $f_2$, $f_3$, and $f_4$, and frequencies of the five second signals are $f_5$, $f_6$, $f_7$, $f_8$, and $f_9$. Then, the second device sends four third signals to the first device, and at the same time, the third device sends five fourth signals to the first device. Frequencies of the four third signals are $f_1$, $f_2$, $f_3$, and $f_4$, and frequencies of the five fourth signals are $f_5$, $f_6$, $f_7$, $f_8$, and $f_9$.

Example 2: It is assumed that based on Example 1, the plurality of first transmit signals sent by the first device in the first frequency band further include six signals sent to the fourth device, and frequencies of the six signals are $f_{10}$, $f_{11}$, $f_{12}$, $f_{13}$, $f_{14}$, and $f_{15}$. After receiving the six signals, the fourth device also sends six signals to the first device, and frequencies of the six signals are also $f_{10}$, $f_{11}$, $f_{12}$, $f_{13}$, $f_{14}$, and $f_{15}$.

In an implementation method, the P first signals and the P third signals are used to measure a distance between the first device and the second device, and the Q second signals and the Q fourth signals are used to measure a distance between the first device and the third device. For example, the first device separately performs phase measurement on the plurality of received first receive signals to obtain a plurality of phase measurement values, the second device performs phase measurement on the P received first signals to obtain P phase measurement values, and the third device performs phase measurement on the Q received second signals to obtain Q phase measurement values. Then, the first device, the second device, and the third device all send the phase measurement values obtained through measurement and corresponding frequencies to a processing device. The processing device obtains the distance between the first device and the second device through calculation, and obtains the distance between the first device and the third device through calculation.

In another implementation method, the P first signals and the P third signals are used to measure a channel between the first device and the second device, and the Q second signals and the Q fourth signals are used to measure a channel between the first device and the third device.

In an implementation method, to improve measurement accuracy, the first device, the second device, and the third device may measure signals at more frequencies. For example, after step 802a, the first device sends a plurality of second transmit signals in the first frequency band, where the plurality of second transmit signals include Q fifth signals sent to the second device and P sixth signals sent to the third device, frequencies of the Q fifth signals are correspondingly the same as the frequencies of the Q second signals, and frequencies of the P sixth signals are correspondingly the same as the frequencies of the P first signals. Then, the first device receives a plurality of second receive signals, where the plurality of second receive signals include Q seventh signals from the second device and P eighth signals from the third device, frequencies of the P eighth signals are correspondingly the same as the frequencies of the P sixth signals, and frequencies of the Q seventh signals are correspondingly the same as the frequencies of the Q fifth signals.

Example 1 is used as an example. After the first device sends the plurality of first transmit signals and receives the plurality of first receive signals, the first device sends the plurality of second transmit signals. The plurality of second transmit signals include five fifth signals sent to the second device and four sixth signals sent to the third device, frequencies of the five fifth signals are $f_5$, $f_6$, $f_7$, $f_8$, and $f_9$, and frequencies of the four sixth signals are $f_1$, $f_2$, $f_3$, and $f_4$. Then, the second device sends five seventh signals to the first device, and at the same time, the third device sends four eighth signals to the first device. Frequencies of the five seventh signals are $f_5$, $f_6$, $f_7$, $f_8$, and $f_9$, and frequencies of the four eighth signals are $f_1$, $f_2$, $f_3$, and $f_4$.

In an implementation method, the Q fifth signals and the Q seventh signals are used to measure a distance between the first device and the second device, and the P sixth signals and the P eighth signals are used to measure a distance between the first device and the third device.

In another implementation method, the Q fifth signals and the Q seventh signals are used to measure a channel between the first device and the second device, and the P sixth signals and the P eighth signals are used to measure a channel between the first device and the third device.

In an implementation method, the first device sends first signaling to the second device, where the first signaling indicates time and a frequency at which the second device performs signal exchange with the first device. For example, the first signaling may include time information and corresponding frequency information, and the second device determines, based on the first signaling, to perform signal receiving and sending at the corresponding time and at the corresponding frequency. For another example, the first signaling includes an index, and the index indicates time information and frequency information. The second device locally queries, based on the index, the time information and the frequency information that are indicated by the index, and then determines to perform signal receiving and sending at the corresponding time and the corresponding frequency. Similarly, the first device further sends second signaling to the third device, where the second signaling indicates time and a frequency at which the third device performs signal exchange with the first device. An implementation method of the second signaling is similar to an implementation method of the first signaling, and details are not described again.

In an implementation method, after performing signal receiving and sending in the first frequency band with the second device and the third device, the first device may perform frequency hopping to another frequency band to continue signal receiving and sending, for example, perform frequency hopping to a second frequency band to perform signal receiving and sending. An implementation process is similar to that in the foregoing embodiment in FIG. 8(a), and details are not described again. After completing signal receiving and sending in all frequency bands with the second device and the third device, the first device may perform precise channel estimation, or perform precise distance calculation based on phase measurement values obtained through measurement. Ranges of all the frequency bands may be predefined.

In the foregoing solution, the first device may simultaneously send signals to a plurality of other devices, and the plurality of other devices simultaneously send signals to the first device, thereby implementing signal parallel sending. Therefore, there is no necessary relationship between signal sending time and a quantity of devices. Compared with a method for sending, by the first device and the plurality of other devices, the signals one by one in a specific sequence, the solution of the present invention can reduce signal receiving and sending time, and further reduce time for performing measurement based on the signals.

FIG. 8(b) is a schematic flowchart of a communication method according to an embodiment of this application. The method may be used for AoA direction finding. The method includes the following steps.

Step 801b: A first device receives a plurality of first receive signals in a first frequency band through a first antenna.

The plurality of first receive signals include X first signals from a second device and Y second signals from a third device, frequencies of the X first signals and the Y second signals are different from each other, a frequency band in which the X first signals are located is included in the first frequency band, a frequency band in which the Y second signals are located is included in the first frequency band, and both X and Y are positive integers. X and Y may be equal, or may not be equal.

Optionally, the plurality of first receive signals further include one or more signals from another device.

The first device is a broadband device, and the second device and the third device are narrowband devices.

In an implementation method, the first device is an anchor device, and the second device and the third device are to-be-positioned target devices.

In another implementation method, the first device is a to-be-positioned target device, and the second device and the third device are anchor devices.

Step 802b: The first device receives the plurality of first receive signals in the first frequency band through a second antenna.

Signals received through the second antenna are the same as signals received through the first antenna, and are the plurality of first receive signals.

It should be noted that this application is described by using an example in which the first device includes two antennas. In practice, a quantity of antennas is not limited. For example, if the first device includes three or more antennas, all these antennas may receive the plurality of first receive signals.

The following provides descriptions with reference to examples. It is assumed that X=4 and Y=5. In this case, the first device receives the plurality of first receive signals in the first frequency band through the first antenna, the plurality of first receive signals include four first signals from the second device and five second signals from the third device, frequencies of the nine signals are different from each other, and a frequency band in which the frequencies of the nine signals are located is included in the first frequency band. For example, frequencies of the four first signals are $f_1$, $f_2$, $f_3$, and $f_4$, and frequencies of the five second signals are $f_5$, $f_6$, $f_7$, $f_8$, and $f_9$. Then, the first device switches to the second antenna, and the second antenna also receives the nine signals. Certainly, if the first device has two receive channels, and each receive channel corresponds to one antenna, through the two receive channels, the first device may simultaneously receive the nine signals through the first antenna, and receive the nine signals through the second antenna.

Subsequently, the first device performs phase measurement on the X first signals received through the first antenna, and performs phase measurement on the X first signals received through the second antenna, to obtain 2*X first phase measurement values, where the 2*X first phase measurement values are used to determine a direction between the first device and the second device. For example, the first device sends the 2*X first phase measurement values to a processing device, and the processing device determines the direction (that is, an angle) between the first device and the second device based on the 2*X first phase measurement values.

The first device performs phase measurement on the Y second signals received through the first antenna, and performs phase measurement on the Y second signals received through the second antenna, to obtain 2*Y second phase measurement values, where the 2*Y second phase measurement values are used to determine a direction between the first device and the third device. For example, the first device sends the 2*Y second phase measurement values to the processing device, and the processing device determines the direction (that is, an angle) between the first device and the third device based on the 2*Y second phase measurement values.

In an implementation method, to improve measurement accuracy, the first device may send signals at more frequencies. For example, after step 802b, the first device receives a plurality of second receive signals in the first frequency band through the first antenna, where the plurality of second receive signals include Y third signals from the second device and X fourth signals from the third device, frequencies of the X fourth signals are correspondingly the same as frequencies of the X first signals, and frequencies of the Y third signals are correspondingly the same as frequencies of the Y second signals. The first device receives the plurality of second receive signals in the first frequency band through the second antenna.

The foregoing example is used as an example. After the first device receives the plurality of first receive signals through the first antenna and the first device receives the plurality of first receive signals through the second antenna, the first device receives the plurality of second receive signals through the first antenna and the first device receives the plurality of second receive signals through the second antenna. The plurality of second receive signals include five third signals from the second device and four fourth signals from the third device, frequencies of the five third signals are $f_5$, $f_6$, $f_7$, $f_8$, and $f_9$, and frequencies of the four fourth signals are $f_1$, $f_2$, $f_3$, and $f_4$. Subsequently, the first device performs phase measurement on the nine signals received through the first antenna to obtain nine phase measurement values, and performs phase measurement on the nine signals received through the second antenna to obtain nine phase measurement values. Then, the first device sends the 18 phase measurement values to the processing device, and the processing device determines the direction (that is, the angle) between the first device and the second device based on the 18 phase values.

In an implementation method, the first device sends first signaling to the second device, where the first signaling indicates time and a frequency at which the second device performs signal exchange with the first device. For example, the first signaling may include time information and corresponding frequency information, and the second device determines, based on the first signaling, to perform signal sending at the corresponding time and at the corresponding frequency. For another example, the first signaling includes an index, and the index indicates time information and frequency information. The second device locally queries, based on the index, the time information and the frequency information that are indicated by the index, and then determines to perform signal sending at the corresponding time and the corresponding frequency. Similarly, the first device further sends second signaling to the third device, where the second signaling indicates time and a frequency at which the third device performs signal exchange with the first device. An implementation method of the second signaling is similar to an implementation method of the first signaling, and details are not described again.

In an implementation method, after performing signal receiving and sending in the first frequency band with the second device and the third device, the first device may perform frequency hopping to another frequency band to continue signal receiving and sending, for example, perform frequency hopping to a second frequency band to perform signal receiving and sending. An implementation process is similar to that in the foregoing embodiment in FIG. 8(b), and details are not described again. After completing signal receiving and sending in all frequency bands with the second device and the third device, the first device may perform precise channel estimation, or perform precise direction calculation based on phase measurement values obtained through measurement. Ranges of all the frequency bands may be predefined.

In the foregoing solution, the first device may simultaneously receive signals from a plurality of other devices, thereby implementing signal parallel sending. Therefore, there is no necessary relationship between signal sending time and a quantity of devices. Compared with a method for receiving, by the first device, the signals from the plurality of other devices one by one in a sequence, the solution of the present invention can reduce signal sending time, and further reduce time for performing measurement based on the signals.

FIG. 8(c) is a schematic flowchart of a communication method according to an embodiment of this application. The method may be used for MCPD ranging. The method includes the following steps.

Step 801c: A first device receives L first signals from a second device, and receives L second signals from a third device.

The L first signals are sent by the second device in a first frequency band, the L second signals are sent by the third device in the first frequency band, and L is a positive integer. Frequencies of the L first signals are correspondingly the same as frequencies of the L second signals.

The first device is a narrowband device, and the second device and the third device are broadband devices.

In an implementation method, the first device is an anchor device, and the second device and the third device are to-be-positioned target devices.

In another implementation method, the first device is a to-be-positioned target device, and the second device and the third device are anchor devices.

In an implementation method, the second device simultaneously sends H first signals, L first signals in the H first signals are sent to the first device, and the other H-L signals in the H first signals are sent to other R narrowband devices. Similarly, the third device simultaneously sends H second signals, L second signals in the H second signals are sent to the first device, and the other H-L signals in the H second signals are sent to the other R narrowband devices, where R is a positive integer. Frequencies of the H first signals are different from each other, frequencies of the H second signals are different from each other, and the frequencies of the H first signals are correspondingly the same as the frequencies of the H second signals. In addition, in addition to the second device and the third device, one or more other devices may also send H signals to the first device and the R other narrowband devices in a manner in which the second device or the third device sends the signals.

Step 802c: The first device sends L third signals in a broadcast manner.

If the first device sends the L third signals in the broadcast manner, both the second device and the third device may receive the L third signals.

Frequencies of the L third signals are correspondingly the same as the frequencies of the L first signals.

The following provides descriptions with reference to examples. It is assumed that L=4. In this case, the second device sends nine first signals in the first frequency band, where four first signals are sent to the first device, and the other five first signals are sent to another narrowband device (referred to as a fourth device). Then, the third device sends nine second signals in the first frequency band, where four second signals are sent to the first device, and the other five second signals are sent to the fourth device. Frequencies of the nine first signals are different from each other, frequencies of the nine second signals are different from each other, and the frequencies of the nine first signals are correspondingly the same as the frequencies of the nine second signals. For example, the frequencies of nine first signals are $f_1$, $f_2$, $f_3$, $f_4$, $f_5$, $f_6$, $f_7$, $f_8$, and $f_9$, and the frequencies of the nine second signals are $f_1$, $f_2$, $f_3$, $f_4$, $f_5$, $f_6$, $f_7$, $f_8$, and $f_9$. After receiving the four first signals from the second device and the four second signals from the third device, the first device sends four third signals in a broadcast manner. Frequencies of the four third signals are $f_1$, $f_2$, $f_3$, and $f_4$. Both the second device and the third device can receive the four third signals. After receiving the five first signals from the second device and the five second signals from the third device, the fourth device sends five fourth signals in a broadcast manner. Frequencies of the five fourth signals are $f_5$, $f_6$, $f_7$, $f_8$, and $f_9$. Both the second device and the third device can receive the five fourth signals.

In an implementation method, the L first signals and the L third signals are used to measure a channel between the first device and the second device, and the L second signals and the L third signals are used to measure a channel between the first device and the third device. For example, the first device separately performs phase measurement on the received L first signals and the received L second signals to obtain a plurality of phase measurement values, the second device performs phase measurement on the received L third signals to obtain L phase measurement values, and the third device performs phase measurement on the L third signals to obtain L phase measurement values. Then, the first device, the second device, and the third device all send the phase measurement values obtained through measurement and corresponding frequencies to a processing device. The processing device obtains a distance between the first device and the second device through calculation, and obtains a distance between the first device and the third device through calculation.

In another implementation method, the P first signals and the P third signals are used to measure a channel between the first device and the second device, and the Q second signals and the Q fourth signals are used to measure a channel between the first device and the third device.

In an implementation method, the first device sends first signaling to the second device, where the first signaling indicates time and a frequency at which the second device performs signal exchange with the first device. For example, the first signaling may include time information and corresponding frequency information, and the second device determines, based on the first signaling, to perform signal receiving and sending at the corresponding time and at the corresponding frequency. For another example, the first signal includes an index, and the index indicates time information and frequency information. The second device locally queries, based on the index, the time information and the frequency information that are indicated by the index, and then determines to perform signal receiving and sending at the corresponding time and the corresponding frequency. Similarly, the first device further sends second signaling to the third device, where the second signaling indicates time and a frequency at which the third device performs signal exchange with the first device. An implementation method of the second signaling is similar to an implementation method of the first signaling, and details are not described again.

In the foregoing solution, the first device may simultaneously send signals to a plurality of other devices in a broadcast manner, thereby implementing signal parallel sending. Therefore, there is no necessary relationship between signal sending time and a quantity of devices. Compared with a method for sending, by the first device and the plurality of other devices, the signals one by one in a specific sequence, the solution of the present invention can reduce signal receiving and sending time, and further reduce time for performing measurement based on the signals.

For ease of understanding the solutions in FIG. 8(a), FIG. 8(b), and FIG. 8(c), the following describes the foregoing solutions with reference to accompanying drawings and specific embodiments.

**Embodiment 1**

An anchor device in Embodiment 1 is a specific example of the first device in the embodiment in FIG. 8(a), and target devices in Embodiment 1 are specific examples of the second device and the third device in the embodiment in FIG. 8(a).

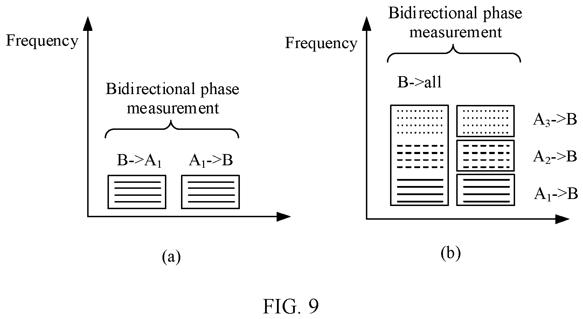

A scenario considered in this embodiment is "one-to-many" MCPD ranging between one anchor device and a plurality of target devices. (a) in FIG. 9 is a diagram of one round of bidirectional signal exchange between an anchor device and a target device in a conventional MCPD ranging method. In each round of bidirectional phase measurement, the anchor device exchanges a narrowband signal (that is, a carrier signal or a narrowband multi-tone signal) with one target device, and performs corresponding phase measurement.

For an indoor positioning system, a quantity of anchor devices is usually less than a quantity of target devices, and the anchor device is powered by a cable. In addition, a requirement of the anchor device on a volume form is less strict than that of the target device. Therefore, compared with the target device that has a very strict requirement on costs and power consumption, the anchor device may have higher costs, higher power consumption, and a more complex design. In other words, the anchor device and the target device may be designed in a non-peer-to-peer manner. Therefore, the present invention proposes that an anchor device uses a wide broadband design, and simultaneously performs bidirectional signal exchange and phase measurement with a plurality of narrowband target devices, thereby reducing overall one-to-many MCPD ranging time.

(b) in FIG. 9 is a diagram of one round of bidirectional signal exchange between an anchor device and target devices in an MCPD ranging method according to an embodiment of this application. In this embodiment, the anchor device is a broadband device, and the target device is a narrowband device. The anchor device sends some multi-tone signals of an overall bandwidth. In (b) in FIG. 9, $N_{tone} = 4$ and $N = 3$ are used as examples. It is assumed that an interval between two adjacent tones is 1 MHz. In this case, the overall bandwidth is about 12 MHz. A frequency to be measured by each target device is allocated the target device in advance, and then the target device receives a corresponding tone (that is, a corresponding narrowband multi-tone signal) of the target device and measures a phase of each tone. For example, $A_1$ in the figure receives four tones with lowest frequencies among 12 tones and measures their phases, $A_3$ receives four tones with highest frequencies among the 12 tones and measures their phases, and $A_2$ receives four tones with middle frequencies among the 12 tones and measures their phases.

After the anchor device sends the signal, a role of the anchor device changes from a sending device to a receiving device, and a role of the target device changes from a receiving device to a sending device. Similar to conventional "one-to-one" MCPD ranging, in the foregoing transmit/receive role switching process, a local oscillator (Local Oscillator, LO) of the device cannot be unlocked, to maintain continuity of an LO phase.

Then, all the target devices simultaneously send narrowband multi-tone signals corresponding to the frequencies respectively allocated to the target devices, and frequency allocation in a case in which the target device sends a signal is consistent with frequency allocation in a case in which the target device receives a signal. (b) in FIG. 9 is used as an example. $A_1$ sends four tones with lowest frequencies among 12 tones, $A_3$ sends four tones with highest frequencies among the 12 tones, and $A_2$ sends four tones with middle frequencies among the 12 tones. The anchor device receives the 12 tones (that is, one broadband multi-tone signal), and measures a phase of each tone.

For the descriptions of the round of signal exchange, the following aspects need to be noted:

In the foregoing descriptions, signal exchange is a sequence of "sending by the anchor device and receiving by the target device" and then "sending by the target device and receiving by the anchor device". Actually, the sequence may alternatively be "sending by the target device and receiving by the anchor device", and then "sending by the anchor device and receiving by the target device". This is not limited in the present invention.

In the foregoing descriptions, the tones are evenly distributed at an equal interval of 1 MHz. Actually, the tones may alternatively be distributed at an unequal interval. For example, in (b) in FIG. 9, there may be an interval of 1 MHz or another interval between a tone with a highest frequency in $A_1$ and a tone with a lowest frequency in $A_2$. This is not limited in the present invention.

In the foregoing descriptions, quantities of tones allocated to all the target devices are the same, and in the foregoing example, the quantity of tones is 4. Actually, different quantities of tones may be allocated to all the target devices, and an interval between the tones may be set randomly. This is not limited in the present invention.

In the foregoing descriptions, a mechanism (or protocol) is required to set parameters for signal exchange between the devices in advance, for example, frequency allocation of a tone of the target device, start sending time of the anchor device, and a sending start time of the target device.

For the foregoing one-round signal exchange manner between the anchor device and the target devices, the one-round signal exchange manner is merely used to measure phases of some frequencies in an entire frequency band. For example, in (b) in FIG. 9, one round of signal exchange may be used to measure 12 frequencies in $N_f$ frequencies.

Next, this application proposes two scheduling methods, so that signal exchange and phase measurement at all frequencies in the entire frequency band can be quickly completed between the anchor device and each target device.

In a scheduling method 1, phase measurement at $N * N_{tone}$ frequencies is first completed between the anchor device and N devices, and then phase measurement at a next group of $N * N_{tone}$ frequencies is completed until phase measurement at all the frequencies is completed.

Specifically, the anchor and the N target devices complete the phase measurement at the $N * N_{tone}$ fre-

quencies through N times of bidirectional signal exchange, and used time is $T_{ex} * N$. For one target device, one time of signal exchange may complete phase measurement of the target device and the anchor device at $N_{tone}$ frequencies. After each round of signal exchange is completed, all the target devices adjust relative locations in frequency allocation, so that each target device uses a new frequency to perform phase measurement. A frequency allocation mechanism is not limited in this application.

Similarly, the anchor device repeats the foregoing signal exchange with the N target devices, to complete the phase measurement at the next group of $N * N_{tone}$ frequencies until the measurement at all the frequencies in the entire frequency band is completed.

Overall measurement time is

$$(T_{ex} * N) * \left(\frac{N_f}{N * N_{tone}}\right) = T_{ex} * N_f / N_{tone}$$

, where $N_f$ is a quantity of all frequencies in an available frequency band. It can be seen that, the overall measurement time in the present invention has no relationship with the quantity N of target devices. However, conventional "one-to-many" measurement time is $N \cdot T_{ex} \cdot N_f / N_{tone}$, and the measurement time is in a linear increasing relationship with N. Therefore, the overall measurement time in the present invention is one of $N^{th}$ of the measurement time in the conventional method. This reduces the measurement time, and the measurement time is irrelevant to the quantity of target devices.

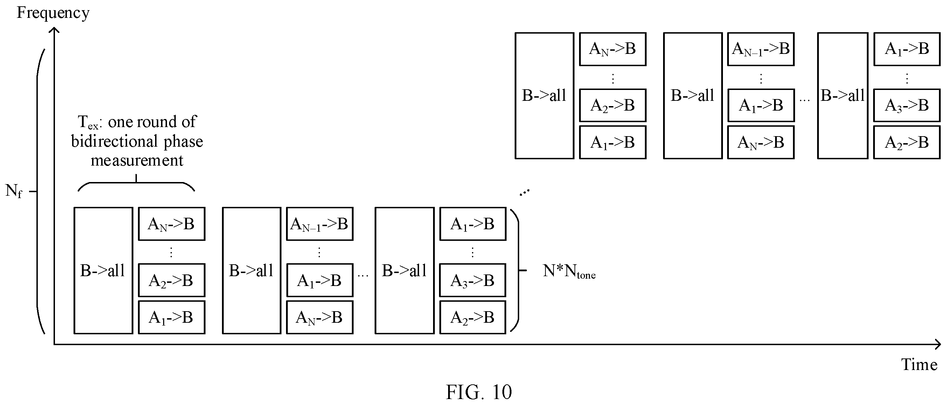

FIG. 10 is a diagram of a specific example of the scheduling method 1. It can be seen that for a first group of $N * N_{tone}$ frequencies, each time one round of signal measurement is completed, the target devices switch frequencies in a fixed sequence, and then perform one round of signal measurement. After N-1 times of switching, the measurement at the group of $N * N_{tone}$ frequencies may be completed. Therefore, measurement time required for each group of $N * N_{tone}$ frequencies is $T_{ex} * N$. Then, a second group of $N * N_{tone}$ frequencies are measured according to the same method until measurement at $\frac{N_f}{N * N_{tone}}$ groups of frequencies is completed.

In a scheduling method 2, relative locations of target devices between the anchor device and the N devices remain unchanged, and phase measurement at $N_f$ frequencies is completed. Then, locations of the target devices are changed in a fixed sequence each time, and the phase measurement at the $N_f$ frequencies is completed until the phase measurement at all the frequencies is completed.

Specifically, the relative locations of the target devices in frequency allocation first remain unchanged to perform $\frac{N_f}{N \cdot N_{tone}}$ rounds of signal exchange. Then, the relative locations of the target devices in frequency allocation are adjusted, and the foregoing signal exchange is repeated until each target device completes measurement at all the frequencies. Overall measurement time of this scheduling method is $T_{ex} * \frac{N_f}{N \cdot N_{tone}} * N = T_{ex} * N_f / N_{tone}$. It can be learned that the overall measurement time required by the two scheduling methods is the same, and is irrelevant to the quantity N of target devices.

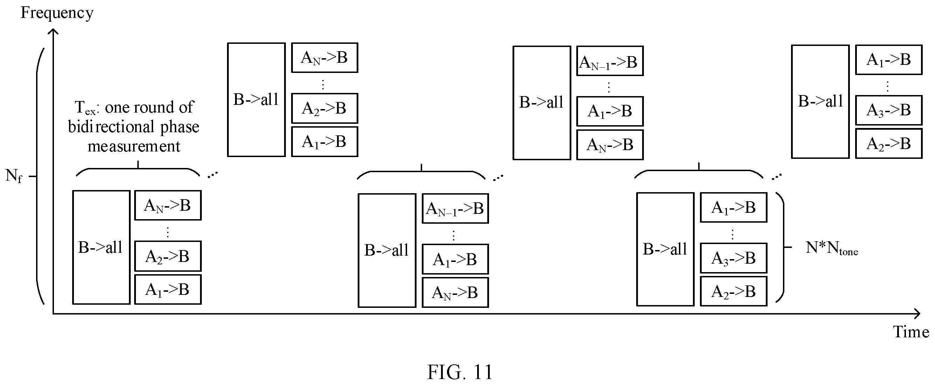

FIG. 11 is a diagram of a specific example of the scheduling method 2. It can be seen that, at the beginning, frequencies allocated to a target device 1, a target device 2, ..., and a target device N are in ascending sequence. In this case, a lowest frequency is allocated to the target device 1, and a highest frequency is allocated to the target device N. Then, $\frac{N_f}{N \cdot N_{tone}}$ rounds of signal exchange are performed. Then, relative locations of the target devices at the frequencies are adjusted once. In this case, the lowest frequency is allocated to the target device N, and the highest frequency is allocated to the target device N-1. Then, $\frac{N_f}{N \cdot N_{tone}}$ rounds of signal exchange are performed, and the foregoing process is repeated until each target device completes measurement at all the frequencies.

**Embodiment 2**

Anchor devices in Embodiment 2 are specific examples of the second device and the third device in the embodiment in FIG. 8(c), and a target device in Embodiment 2 is a specific example of the first device in the embodiment in FIG. 8(c).

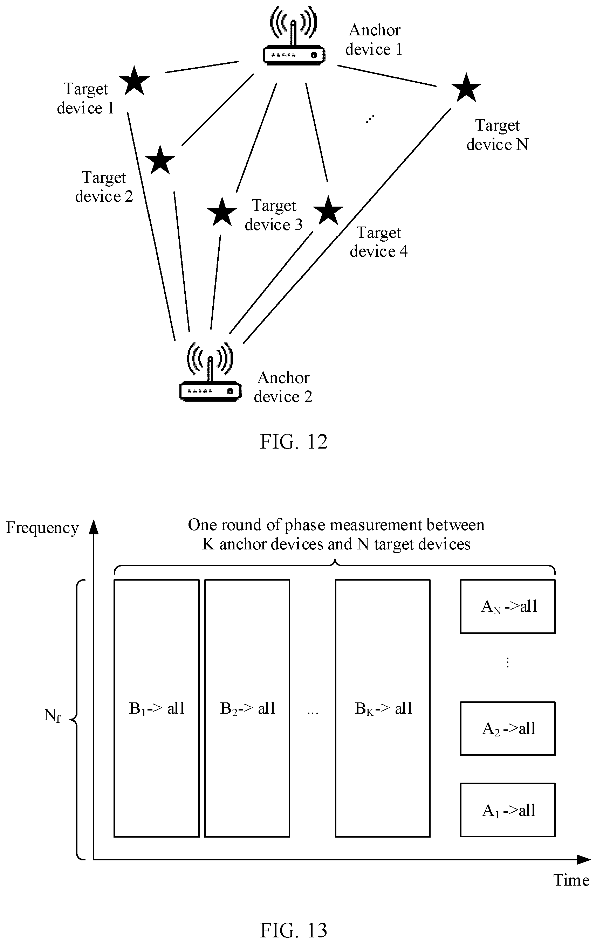

The scenario considered in Embodiment 1 of the present invention is the "one-to-many" MCPD ranging between one anchor device and a plurality of target devices. Embodiment 2 extends Embodiment 1, and a considered scenario is "many-to-many" MCPD ranging between a plurality of anchor devices and a plurality of target devices. FIG. 12 is a diagram of ranging between two anchor devices and N target devices.

Similar to the "one-to-many" ranging scenario, the anchor in the "many-to-many" ranging scenario also uses a broadband design, and the target device also retains a narrowband design. A difference between Embodiment 2 and Embodiment 1 lies in that manners of one round of signal exchange between the anchor device and the target device are different.

FIG. 13 is a diagram of phase measurement of one round of signal exchange between K anchor devices and N target devices. The K anchor devices (that is, $B_1$, $B_2$, ..., and $B_K$) send broadband multi-tone signals in turn in a specific sequence. When an anchor device sends a multi-tone signal, each target device receives a narrowband multi-tone signal corresponding to a frequency allocated to the target device and performs phase measurement.

After the K anchor devices finish sending the multi-tone signals, the N target devices simultaneously send the narrowband multi-tone signals corresponding to the frequencies allocated to the N target devices, and then the K anchor devices simultaneously receive the multi-tone signals and perform phase measurement.

Similar to the "one-to-many" ranging in Embodiment 1, Embodiment 2 does not limit a sequence of sending a signal by a device, a start time point of sending the signal, frequency allocation, and the like.

For the "one-to-many" ranging manner in Embodiment 1, the time required for one round of signal exchange is $T_{ex}$. Generally, continuously performing K rounds of "one-to-many" signal exchange may implement "many-to-many" ranging between the K anchor devices and the N target devices, and correspondingly, time required for an overall round of signal exchange is $T_{ex} * K$. However, according to the "many-to-many" signal exchange method provided in Embodiment 2, time required for an overall round of signal exchange may be reduced to $(T_{ex} * \frac{K}{2} + T_{ex} * \frac{1}{2})$, that is, $T_{ex} * \frac{K+1}{2}$, where $T_{ex} * \frac{K}{2}$ indicates time at which the K anchor devices send the multi-tone signals to the N target devices in one round of signal exchange, and $T_{ex} * \frac{1}{2}$ indicates time at which the N target devices send the multi-tone signals to the K anchor devices in one round of signal exchange.

The two scheduling methods proposed in Embodiment 1 are also applicable to one-round signal exchange manner in the "many-to-many" scenario in Embodiment 2, and are used to complete measurement at all frequencies in an entire frequency band.

## Embodiment 3

Anchor devices in Embodiment 3 are specific examples of the second device and the third device in the embodiment in FIG. 8(a), and a target device in Embodiment 3 is a specific example of the first device in the embodiment in FIG. 8(a).

For the positioning application scenarios considered in Embodiment 1 and Embodiment 2, the anchor device is powered by a cable and has a small volume limitation. Therefore, the anchor device may use a broadband design with higher complexity, and the target device continues to maintain a narrowband design (that is, features of low power consumption and low costs are maintained). In actual positioning application, there may alternatively be a case in which an anchor device is simple but a target device is complex.

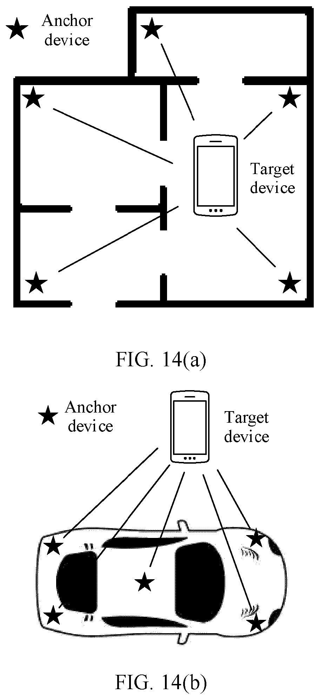

FIG. 14(a) is an example diagram of determining a target device via anchor devices. In this example, a plurality of anchor devices are deployed indoors (for example, a store or a hospital), and the anchor devices are simple. For example, a beacon device may be used as the anchor device. An indoor location of a user may be calculated based on a ranging value between the anchor device and a terminal (for example, a mobile phone). The beacon device generally supplies power to a button cell, and has a long battery replacement period. In addition, the beacon has a simple structure. A battery capacity of the mobile phone is larger and the mobile phone can be frequently charged.

FIG. 14(b) is another example diagram of determining a target device via anchor devices. In this example, a plurality of narrowband low-power modules are deployed at locations of a vehicle as anchor devices. A location of a user relative to the vehicle may be calculated based on a distance value between the anchor device and a terminal (for example, a mobile phone), and then may be used to trigger some operations for improving user experience, for example, when the user is beside a door of the vehicle, the car automatically unlocks the door.

For the "one-to-many" or "many-to-many" ranging in the foregoing application scenario, the target device uses the broadband design (for example, the mobile phone already supports a wireless broadband technology like Wi-Fi), and the anchor device retains the narrowband design. In this way, the overall ranging time may be reduced according to a solution similar to those in Embodiment 1 and Embodiment 2. Specifically, roles of the "anchor device" and the "target device" in Embodiment 1 and Embodiment 2 are exchanged, and obtained "one-to-many" and "many-to-many" ranging solutions may be used in the application scenario considered in Embodiment 3.

## Embodiment 4

An anchor device in Embodiment 4 is a specific example of the first device in the embodiment in FIG. 8(b), and target devices in Embodiment 4 are specific examples of the second device and the third device in the embodiment in FIG. 8(b).

In this embodiment, a problem of angle measurement between one anchor device and a plurality of target devices in an AoA system is considered.

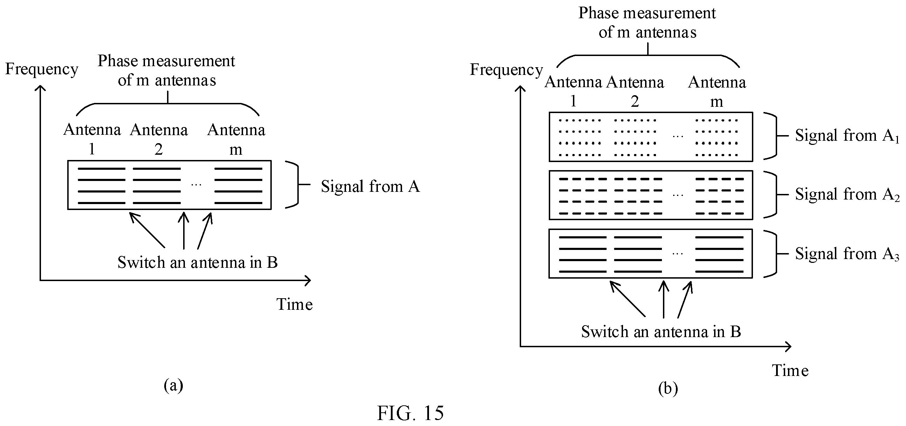

(a) in FIG. 15 is a diagram of one round of unidirectional signal exchange between an anchor device and target devices in a conventional AoA angle measurement method. A is a target device and serves as a single-antenna AoA sending device, and B is the anchor device and serves as a multi-antenna AoA receiving device. For example, if three target devices $A_1$, $A_2$, and $A_3$ need to measure angles, AoA measurement shown in (a) in FIG. 15 needs to be performed in turn in sequence.

(b) in FIG. 15 is a diagram of one round of unidirectional signal exchange between an anchor device and a plurality of target devices in an AoA angle measurement method according to this application. Similar to Embodiment 1, the anchor device B is powered by a cable and uses a broadband design, and the target device is powered by a battery and uses a narrowband design. The plurality of target devices (for example, A$_1$, A$_2$, and A$_3$ shown in the figure) simultaneously send narrowband multi-tone signals corresponding to frequencies respectively allocated to the plurality of target devices, and the anchor device (for example, B shown in the figure) simultaneously receives these narrowband multi-tone signals (which may be considered as one broadband multi-tone signal as a whole). At the same time, B switches antennas and measures phase values corresponding to tones received through different antennas.

For the "one-to-many" ranging considered in Embodiment 1, one round of signal exchange includes two parts: The anchor device sends the broadband multi-tone signals to the plurality of target devices, and the plurality of target devices simultaneously sends the respective narrowband multi-tone signals to the anchor device. The second part is similar to signal sending of AoA measurement performed by the plurality of target devices considered in Embodiment 4, that is, the plurality of target devices simultaneously send the respective narrowband multi-tone signals to the anchor device. A main difference lies in that the anchor device in Embodiment 4 needs to switch an antenna when receiving a signal. Therefore, the two scheduling methods proposed in Embodiment 1 are also applicable to the AoA measurement performed by the plurality of target devices in Embodiment 4, and may be used to reduce overall AoA measurement time. Specifically, it is assumed that $T_{ex}$ is time at which the anchor device switches one round of antennas and performs phase measurement, $N_f$ is a quantity of all frequencies in an available frequency band, $N$ is a quantity of target devices, and $N_{tone}$ is a quantity of tones in a multi-tone signal. In this case, time for completing AoA measurement performed by $N$ target devices in a conventional method is $N \cdot T_{ex} \cdot N_f/N_{tone}$, while time required by the AoA solution in Embodiment 4 is $T_{ex} \cdot N_f/N_{tone}$, that is, the measurement time is irrelevant to the quantity N of target devices, and overall measurement time is one of N$^{th}$ of that in the conventional method.

The foregoing "one-to-many" AoA measurement considers AoA measurement between one anchor device and a plurality of target devices. This solution may also be extended to AoA measurement between a plurality of anchor devices and a plurality of target devices. Specifically, when the plurality of target devices simultaneously send respective narrowband multi-tone signals, the plurality of broadband anchor devices may simultaneously receive these narrowband multi-tone signals, to implement "many-to-many" AoA measurement.

In the foregoing embodiments of this application, an asymmetric "anchor device vs target device" design is proposed, so that a complex device uses a broadband design to simultaneously exchange signals with a plurality of low-power narrowband devices. In addition, a scheduling manner of device signal measurement is also proposed, and is used to complete signal exchange at all the frequencies in the entire frequency band. In the foregoing embodiments, the measurement time of the narrowband low-power device during "one-to-many" or "many-to-many" ranging or AoA direction finding can be reduced, and more measurement times can be allowed in a unit time, that is, a capacity of a positioning system can be increased.

It may be understood that, to implement the functions in the foregoing embodiments, the anchor device and the target device include corresponding hardware structures and/or software modules for performing the functions. A person skilled in the art should be easily aware that, with reference to the example units, algorithms, and steps described in embodiments disclosed in this application, this application can be implemented by hardware or a combination of hardware and computer software. Whether a function is performed by hardware or hardware driven by computer software depends on particular application scenarios and design constraints of the technical solutions.

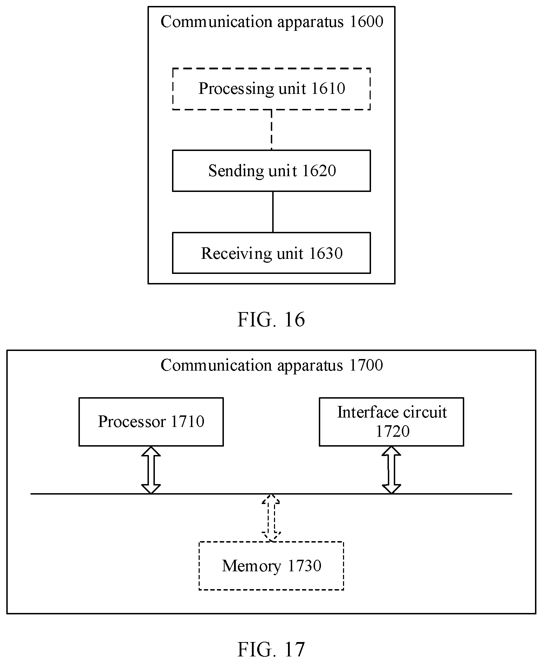

FIG. 16 and FIG. 17 are diagrams of possible structures of communication apparatuses according to embodiments of this application. These communication apparatuses may be configured to implement functions of the first device in the foregoing method embodiments. Therefore, beneficial effects of the foregoing method embodiments can also be implemented. In embodiments of this application, the communication apparatus may be the first device, or may be a module (for example, a chip) used in the first device.

A communication apparatus 1600 shown in FIG. 16 includes a sending unit 1620 and a receiving unit 1630. Optionally, the communication apparatus 1600 further includes a processing unit 1610. The communication apparatus 1600 is configured to implement functions of the first device in the foregoing method embodiments.

When the communication apparatus 1600 is configured to perform the method performed by the first device in the foregoing embodiment, the sending unit 1620 is configured to send a plurality of first transmit signals in a first frequency band, where the plurality of first transmit signals include P first signals sent to a second device and Q second signals sent to a third device, frequencies of the P first signals and the Q second signals are different from each other, a frequency band in which the P first signals are located is included in the first frequency band, a frequency band in which the Q second signals are located is included in the first frequency band, and both P and Q are positive integers. The receiving unit 1630 is configured to receive a plurality of first receive signals, where the plurality of first receive signals include P third signals from the second device and Q fourth signals from the third device, frequencies of the P third signals are correspondingly the same as frequencies of the P first signals, and frequencies of the Q fourth signals are correspondingly the same as frequencies of the Q second signals.

In a possible implementation method, the P first signals and the P third signals are used to measure a channel between the first device and the second device, and the Q second signals and the Q fourth signals are used to measure a channel between the first device and the third device.

In a possible implementation method, the sending unit 1620 is further configured to send a plurality of second transmit signals in the first frequency band, where the plurality of second transmit signals include Q fifth signals sent to the second device and P sixth signals sent to the third device, frequencies of the Q fifth signals are correspondingly the same as the frequencies of the Q second signals, and frequencies of the P sixth signals are correspondingly the same as the frequencies of the P first signals. The receiving unit 1630 is further configured to receive a plurality of second receive signals, where the plurality of second receive signals include Q seventh signals from the second device and P eighth signals from the third device, frequencies of the P eighth signals are correspondingly the same as the frequencies of the P sixth signals, and frequencies of the Q seventh signals are correspondingly the same as the frequencies of the Q fifth signals.

In a possible implementation method, the sending unit 1620 is further configured to: send first signaling to the second device, where the first signaling indicates time and a frequency at which the second device performs signal exchange with the first device; send second signaling to the third device, where the second signaling indicates time and a frequency at which the third device performs signal exchange with the first device.

In a possible implementation method, the first device is an anchor device, and the second device and the third device are to-be-positioned target devices.

In a possible implementation method, the first device is a to-be-positioned target device, and the second device and the third device are anchor devices.

In a possible implementation method, the first device is a broadband device, and the second device and the third device are narrowband devices.

When the communication apparatus 1600 is configured to perform the method performed by the first device in the foregoing embodiment, the receiving unit 1630 is configured to: receive a plurality of first receive signals in a first frequency band through a first antenna, where the plurality of first receive signals include X first signals from a second device and Y second signals from a third device, frequencies of the X first signals and the Y second signals are different from each other, a frequency band in which the X first signals are located is included in the first frequency band, a frequency band in which the Y second signals are located is included in the first frequency band, and both X and Y are positive integers; and receive the plurality of first receive signals in the first frequency band through a second antenna.

In a possible implementation method, the processing unit 1610 is configured to: perform phase measurement on the X first signals received through the first antenna, and perform phase measurement on the X first signals received through the second antenna, to obtain 2*X first phase measurement values, where the 2*X first phase measurement values are used to determine an angle between the first device and the second device; and perform phase measurement on the Y second signals received through the first antenna, and perform phase measurement on the Y second signals received through the second antenna, to obtain 2*Y second phase measurement values, where the 2*Y second phase measurement values are used to determine an angle between the first device and the third device.

In a possible implementation method, the sending unit 1620 is configured to: send first signaling to the second device, where the first signaling indicates time and a frequency at which the second device performs signal exchange with the first device; and send second signaling to the third device, where the second signaling indicates time and a frequency at which the third device performs signal exchange with the first device.

In a possible implementation method, the receiving unit 1630 is further configured to: receive a plurality of second receive signals in the first frequency band through the first antenna, where the plurality of second receive signals include Y third signals from the second device and X fourth signals from the third device, frequencies of the X fourth signals are correspondingly the same as frequencies of the X first signals, and frequencies of the Y third signals are correspondingly the same as frequencies of the Y second signals; and receive the plurality of second receive signals in the first frequency band through the second antenna.

In a possible implementation method, the first device is an anchor device, and the second device and the third device are to-be-positioned target devices.

In a possible implementation method, the first device is a to-be-positioned target device, and the second device and the third device are anchor devices.

In a possible implementation method, the first device is a broadband device, and the second device and the third device are narrowband devices.

When the communication apparatus 1600 is configured to perform the method performed by the first device in the foregoing embodiment, the receiving unit 1630 is configured to: receive L first signals from a second device, and receive L second signals from a third device, where the L first signals are sent by the second device in a first frequency band, the L second signals are sent by the third device in the first frequency band, and L is a positive integer. The sending unit 1620 is configured to send L third signals in a broadcast manner, where frequencies of the L first signals, the L second signals, and the L third signals are correspondingly the same.

In a possible implementation method, the L first signals and the L third signals are used to measure a channel between the first device and the second device, and the L second signals and the L third signals are used to measure a channel between the first device and the third device.

In a possible implementation method, the receiving unit 1630 is further configured to: receive first signaling from the second device, where the first signaling indicates time and a frequency at which the first device performs signal exchange with the second device; and receive second signaling from the third device, where the second signaling indicates time and a frequency at which the first device performs signal exchange with the third device.

In a possible implementation method, the first device is an anchor device, and the second device and the third device are to-be-positioned target devices.

In a possible implementation method, the first device is a to-be-positioned target device, and the second device and the third device are anchor devices.

In a possible implementation method, the first device is a narrowband device, and the second device and the third device are broadband devices.

For more detailed descriptions about the processing unit 1610, the sending unit 1620, and the receiving unit 1630, directly refer to related descriptions in the foregoing method embodiments. Details are not described herein again.

A communication apparatus 1700 shown in FIG. 17 includes a processor 1710 and an interface circuit 1720. The processor 1710 and the interface circuit 1720 are coupled to each other. It may be understood that the interface circuit 1720 may be a transceiver or an input/output interface. Optionally, the communication apparatus 1700 may further include a memory 1730, configured to: store instructions to be executed by the processor 1710, store input data required by the processor 1710 to run instructions, or store data generated after the processor 1710 runs instructions.

When the communication apparatus 1700 is configured to implement the foregoing method embodiments, the processor 1710 is configured to implement a function of the processing unit 1610, and the interface circuit 1720 is configured to implement functions of the sending unit 1620 and the receiving unit 1630.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a base station or a terminal. Certainly, the processor and the storage medium may alternatively exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, the procedures or functions in embodiments of this application are all or partially performed. The computer may be a general-purpose computer, a special-purpose computer, a computer network, a base station, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:

    sending, by a first device, a plurality of first transmit signals in a first frequency band, wherein the plurality of first transmit signals comprise P first signals sent to a second device and Q second signals sent to a third device, frequencies of the P first signals and the Q second signals are different from each other, a frequency band in which the P first signals are located is comprised in the first frequency band, a frequency band in which the Q second signals are located is comprised in the first frequency band, and both P and Q are positive integers; and
    receiving, by the first device, a plurality of first receive signals, wherein the plurality of first receive signals comprise P third signals from the second device and Q fourth signals from the third device, frequencies of the P third signals are correspondingly the same as frequencies of the P first signals, and frequencies of the Q fourth signals are correspondingly the same as frequencies of the Q second signals.

2. The method according to claim 1, wherein the P first signals and the P third signals are used to measure a channel between the first device and the second device, and the Q second signals and the Q fourth signals are used to measure a channel between the first device and the third device.

3. The method according to claim 1 or 2, wherein the method further comprises:

    sending, by the first device, a plurality of second transmit signals in the first frequency band, wherein the plurality of second transmit signals comprise Q fifth signals sent to the second device and P sixth signals sent to the third device, frequencies of the Q fifth signals are correspondingly the same as the frequencies of the Q second signals, and frequencies of the P sixth signals are correspondingly the same as the frequencies of the P first signals; and
    receiving, by the first device, a plurality of second receive signals, wherein the plurality of second receive signals comprise Q seventh signals from the second device and P eighth signals from the third device, frequencies of the P eighth signals are correspondingly the same as the frequencies of the P sixth signals, and frequencies of the Q seventh signals are correspondingly the same as the frequencies of the Q fifth signals.

4. The method according to any one of claims 1 to 3, wherein the method further comprises:

    sending, by the first device, first signaling to the second device, wherein the first signaling indicates time and a frequency at which the second device performs signal exchange with the first device; and
    sending, by the first device, second signaling to the third device, wherein the second signaling indicates time and a frequency at which the third device performs signal exchange with the first device.

5. The method according to any one of claims 1 to 4, wherein
the first device is an anchor device, and the second device and the third device are to-be-positioned target devices.

6. The method according to any one of claims 1 to 4, wherein
the first device is a to-be-positioned target device, and the second device and the third device are anchor devices.

7. The method according to any one of claims 1 to 6, wherein
the first device is a broadband device, and the second device and the third device are narrowband devices.

8. A communication method, comprising:

    receiving, by a first device, a plurality of first receive signals in a first frequency band through a first antenna, wherein the plurality of first receive signals comprise X first signals from a second device and Y second signals from a third device, frequencies of the X first signals and the Y second signals are different from each other, a frequency band in which the X first signals are located is comprised in the first frequency band, a frequency band in which the Y second signals are located is comprised in the first frequency band, and both X and Y are positive integers; and

receiving, by the first device, the plurality of first receive signals in the first frequency band through a second antenna.

9. The method according to claim 8, wherein the method further comprises:

performing, by the first device, phase measurement on the X first signals received through the first antenna, and performing phase measurement on the X first signals received through the second antenna, to obtain 2*X first phase measurement values, wherein the 2*X first phase measurement values are used to determine an angle between the first device and the second device; and

performing, by the first device, phase measurement on the Y second signals received through the first antenna, and performing phase measurement on the Y second signals received through the second antenna, to obtain 2*Y second phase measurement values, wherein the 2*Y second phase measurement values are used to determine an angle between the first device and the third device.

10. The method according to claim 8 or 9, wherein the method further comprises:

sending, by the first device, first signaling to the second device, wherein the first signaling indicates time and a frequency at which the second device performs signal exchange with the first device; and

sending, by the first device, second signaling to the third device, wherein the second signaling indicates time and a frequency at which the third device performs signal exchange with the first device.

11. The method according to any one of claims 8 to 10, wherein the method further comprises:

receiving, by the first device, a plurality of second receive signals in the first frequency band through the first antenna, wherein the plurality of second receive signals comprise Y third signals from the second device and X fourth signals from the third device, frequencies of the X fourth signals are correspondingly the same as frequencies of the X first signals, and frequencies of the Y third signals are correspondingly the same as frequencies of the Y second signals; and

receiving, by the first device, the plurality of second receive signals in the first frequency band through the second antenna.

12. The method according to any one of claims 8 to 11, wherein

the first device is an anchor device, and the second device and the third device are to-be-positioned target devices.

13. The method according to any one of claims 8 to 11, wherein

the first device is a to-be-positioned target device, and the second device and the third device are anchor devices.

14. The method according to any one of claims 8 to 13, wherein

the first device is a broadband device, and the second device and the third device are narrowband devices.

15. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 7 or the method according to any one of claims 8 to 14 through a logic circuit or by executing code instructions.

16. A computer program product, comprising a computer program, wherein when the computer program is executed by a communication apparatus, the method according to any one of claims 1 to 7 is implemented, or the method according to any one of claims 8 to 14 is implemented.

17. A computer-readable storage medium, wherein the storage medium stores a computer program or instructions; and when the computer program or the instructions are run by a communication apparatus, the method according to any one of claims 1 to 7 is implemented, or the method according to any one of claims 8 to 14 is implemented.

18. A communication system, comprising a first device, a second device, and a third device, wherein

the first device is configured to perform the method according to any one of claims 1 to 7; the second device is configured to: receive P first signals from the first device, and send P third signals to the first device, wherein P is a positive integer; and the third device is configured to: receive Q second signals from the first device, and send Q fourth signals to the first device, wherein Q is a positive integer.

19. A communication system, comprising a first device, a second device, and a third device, wherein

the first device is configured to perform the method according to any one of claims 8 to 14; the second device is configured to send X first signals to the first device, wherein X is a positive integer; and the third device is configured to send Y second signals to the first device, wherein Y is a positive integer.

FIG. 1

FIG. 2

FIG. 3

FIG. 4

d*λ*sinθ

d*λ

FIG. 5

Anchor device

Target device 1

Target device 2

Target device 3

Target device 4

Target device N

FIG. 6

FIG. 7

A first device sends a plurality of first transmit signals in a first frequency band — 801a

The first device receives a plurality of first receive signals — 802a

FIG. 8(a)

A first device receives a plurality of first receive signals in a first frequency band through a first antenna — 801b

The first device receives the plurality of first receive signals in the first frequency band through a second antenna — 802b

FIG. 8(b)

A first device receives L first signals from a second device, and receives L second signals from a third device — 801c

The first device sends L third signals in a broadcast manner — 802c

FIG. 8(c)

FIG. 9

FIG. 10

FIG. 11

FIG. 12

FIG. 13

FIG. 14(a)

FIG. 14(b)

EP 4 571 346 A1

(a)

(b)

FIG. 15

Communication apparatus 1600

Processing unit 1610

Sending unit 1620

Receiving unit 1630

FIG. 16

Communication apparatus 1700

Processor 1710

Interface circuit 1720

Memory 1730

FIG. 17

## INTERNATIONAL SEARCH REPORT

| | International application No. |
|---|---|
| | **PCT/CN2023/120826** |

| A. | CLASSIFICATION OF SUBJECT MATTER |
|---|---|

G01S5/14(2006.01)i

According to International Patent Classification (IPC) or to both national classification and IPC

| B. | FIELDS SEARCHED |
|---|---|

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNTXT; ENTXT; CNKI; VEN; ENTXT; ENTXTC; IEEE: 华为, 不同, 不相同, 第三设备, 发射, 发送, 接收, 频段, 频率, 设备, 时间, 相位, MCPD, AOA, angle, differ, send, receiver, frequency, phase, time

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 107356903 A (ZHI KUN JIANGSU SEMICONDUCTOR CO., LTD. et al.) 17 November 2017 (2017-11-17) description, paragraphs [0002]-[0081], and figures 1-7 | 1-7, 15-18 |
| Y | CN 107356903 A (ZHI KUN JIANGSU SEMICONDUCTOR CO., LTD. et al.) 17 November 2017 (2017-11-17) description, paragraphs [0002]-[0081], and figures 1-7 | 8-17, 19 |
| Y | CN 114966545 A (GUANGDONG OPPO MOBILE TELECOMMUNICATIONS CORP., LTD.) 30 August 2022 (2022-08-30) description, paragraphs [0004]-[0164] | 8-17, 19 |
| X | CN 109375167 A (CHINA UNIVERSITY OF MINING AND TECHNOLOGY) 22 February 2019 (2019-02-22) description, paragraphs [0004]-[0095], and figures 1-5 | 1-7, 15-18 |
| X | CN 111164447 A (UBLOX AG) 15 May 2020 (2020-05-15) description, paragraphs [0005]-[0376], and figures 1-17 | 1, 4-7, 15-18 |
| A | US 2020137715 A1 (QUALCOMM INC.) 30 April 2020 (2020-04-30) entire document | 1-19 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 December 2023** | **11 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/120826**

**C.      DOCUMENTS CONSIDERED TO BE RELEVANT**

| Category* | Citation of document, with indication, where appropriate, of the relevant passages | Relevant to claim No. |
|---|---|---|
| A | WO 0165271 A1 (CELL LOC INC. et al.) 07 September 2001 (2001-09-07)<br>      entire document | 1-19 |

Form PCT/ISA/210 (second sheet) (July 2022)

**INTERNATIONAL SEARCH REPORT**
Information on patent family members

International application No.

**PCT/CN2023/120826**

| Patent document cited in search report | | | Publication date (day/month/year) | Patent family member(s) | Publication date (day/month/year) |
|---|---|---|---|---|---|
| CN | 107356903 | A | 17 November 2017 | None | |
| CN | 114966545 | A | 30 August 2022 | None | |
| CN | 109375167 | A | 22 February 2019 | None | |
| CN | 111164447 | A | 15 May 2020 | None | |
| US | 2020137715 | A1 | 30 April 2020 | None | |
| WO | 0165271 | A1 | 07 September 2001 | None | |

Form PCT/ISA/210 (patent family annex) (July 2022)

**REFERENCES CITED IN THE DESCRIPTION**

**Patent documents cited in the description**

- CN 202211211803